# EUROPEAN PATENT APPLICATION

(11) **EP 4 835 482 A1**
(43) Date of publication of application: **04.11.2026**
(21) Application number: 25882952.2
(22) Date of filing: 30.07.2025
(51) Int. Cl.: G01N 35/00, G01N 1/28, G01N 35/10, G01N 1/36, G01N 1/38, G01N 1/44

(54) **UNMANNED AUTOMATED ANALYSIS SYSTEM**

(30) Priority: 22.10.2024 KR 20240145053; 06.03.2025 KR 20250029000
(71) Applicant: LG Energy Solution, Ltd., Seoul 07335 (KR)
(72) Inventor: KIM, Sangwoo, Daejeon 34122 (KR); LEE, Yung Jong, Daejeon 34122 (KR); WON, Jung Hye, Daejeon 34122 (KR)
(74) Representative: Goddar, Heinz J.
(86) International application number: PCT/KR2025/011341
(87) International publication number: WO 2026/089221

(57) **Abstract**

The present invention relates to an unmanned automated analysis system, and more specifically, is to provide an unmanned automated analysis system which automates the entire process of analysis of inorganic materials harmful to the human body to improve the precision and efficiency of the analysis. The unmanned automated analysis system according to the present invention comprises: a sample measurement unit for measuring a set amount of a sample to be analyzed to prepare a first state sample; a sample pretreatment unit for pretreating the first state sample to prepare a second state sample; a sample dilution unit for diluting the second state sample to prepare a third state sample; a sample analysis unit for analyzing the third state sample; a robot arm unit for moving at least one of the first state sample, the second state sample, or the third state sample; and a control unit for controlling the robot arm unit, wherein the robot arm unit is provided with an electrostatic neutralization unit for electrically neutralizing at least one of the first state sample, the second state sample, or the third state sample.

## Description

### Technical Field

The present application claims the benefit of priority based on Korean Patent Application No. 10-2024-0145053 filed on October 22, 2024 and Korean Patent Application No. 10-2025-0029000 filed on March 6, 2025, the entire disclosures of which are incorporated as a part of this specification.

The present disclosure relates to an unmanned automated analysis system, and more particularly, to an unmanned automated analysis system that automates the entire process of analyzing inorganic materials harmful to the human body, thereby improving precision and efficiency of the analysis.

### Background Art

Analysis of inorganic materials is a crucial task in modern industry, and in particular, accurate analysis of the composition of materials is essential for quality control and research and development, such as raw material management in semiconductor manufacturing processes, quality assessment of battery materials, and compositional analysis of advanced alloys. However, most current analysis processes rely heavily on manual labor, which is causing several issues.

Chemicals such as acids (HCl, HNO₃, HF, etc.) used in inorganic material analysis process are highly toxic to the human body. Therefore, direct handling is often required by skilled workers, and the risk of safety accidents is present.

In the inorganic material analysis process, most of the steps, including measuring, preprocessing, and dilution of samples, are done manually, which takes a lot of time and reduces productivity due to repetitive work.

In addition, there is a high possibility that the results will vary depending on the skill level of the worker during the manual process, which is a major factor in reducing the reliability of the analysis.

Therefore, it is necessary to develop inorganic material analysis technology capable of securing the efficiency and reproducibility of analysis while ensuring the safety of workers.

### Disclosure of the Invention

### Technical Goals

The present disclosure relates to an unmanned automated analysis system, and more particularly, to provide an unmanned automated analysis system that automates the entire process of analyzing inorganic materials harmful to the human body, thereby improving the precision and efficiency of the analysis.

Technical objects to be achieved by the present disclosure are not limited to the technical objects mentioned above, and other technical objects not mentioned may be clearly understood by those skilled in the art to which the present disclosure pertains from the description below.

### Technical Solutions

In order to achieve the above objects, the present disclosure provides an unmanned automated analysis system including:
a sample measuring unit configured to measure an analysis target sample in a set amount and prepare the same as a first state sample;
a sample preprocessing unit configured to preprocess the first state sample and prepare the same as a second state sample;
a sample dilution unit configured to dilute the second state sample and prepare the same as a third state sample;
a sample analysis unit configured to analyze the third state sample;
a robot arm unit configured to move one or more of the first state sample, the second state sample, and the third state sample; and
a control unit configured to control the robot arm unit,
wherein the robot arm unit is provided with an electrostatic neutralization part configured to electrically neutralize one or more of the first state sample, the second state sample, and the third state sample.

According to an aspect, the sample measuring unit may include:
a measuring part configured to measure the analysis target sample; and
a dividing part configured to divide the analysis target sample into the set amount and prepare the same as the first state sample,
wherein the measuring part may transmit a measured sample amount value of the measured analysis target sample to the control unit.

According to an aspect, after an amount of the analysis target sample is measured in the measuring part, the robot arm unit may operate the electrostatic neutralization part to remove static electricity from the analysis target sample.

According to an aspect, the sample measuring unit may further include an identification part configured to identify a type of the analysis target sample,
wherein the identification part may match an identified identification type value of the analysis target sample with the measured sample amount value and transmit the identification type value to the control unit.

According to an aspect, physical quantity of the measured sample amount value measured by the measuring part may be mass or volume.

According to an aspect, the dividing part may be provided with one or more sample containers, and the analysis target sample divided into the set amount may be placed in the sample container and prepared as the first state sample.

According to an aspect, the sample preprocessing unit may include a solvent injection part configured to inject an acid solvent into the sample container containing the first state sample;
a preprocessing part configured to preprocess the sample injected with the acid solvent using a microwave and process the same into the second state sample; and
a heating plate part configured to maintain temperature of the second state sample.

According to an aspect, when the sample container is introduced into the preprocessing part, the robot arm unit may couple a container cover to the sample container to make the sample container into a sealed container.

According to an aspect, the unmanned automated analysis system may further include a sample storage unit in which one or more of the first state sample, the second state sample and the third state sample are stored,
wherein the sample preprocessing unit may further include a sample monitoring part configured to monitor an amount of sample in the sample container located in the heating plate part,
the sample monitoring part may transmit a movement signal to the control unit when the amount of sample in the sample container is below a reference value, and
when the control unit receives the movement signal, the robot arm unit may move the sample container of the heating plate part to the sample storage unit.

According to an aspect,
the control unit may transmit to the robot arm unit one of the following command signals for:
i) moving the sample container to the heating plate part, heating the sample container for a predetermined period of time, performing preprocessing in the preprocessing part, and then moving the sample container back to the heating plate part;
ii) moving the sample container to the preprocessing part to perform preprocessing, and moving the sample container to the heating plate part; and
iii) moving the sample container to the preprocessing part to perform preprocessing, and moving the preprocessed second state sample to the sample storage unit.

According to an aspect, the sample dilution unit may include:
an analysis target sample dilution part configured to dilute the second state sample to an optimized concentration for analysis by the analysis unit and process the same as the third state sample; and
a standard solution dilution part configured to dilute a standard solution to create a calibration curve.

According to an aspect, the robot arm unit may receive type information of the second state sample from the control unit and transport the standard solution to the standard solution dilution part.

According to an aspect, the analysis unit may include one or more of an inductively coupled plasma optical emission spectrometer (ICP-OES), an inductively coupled plasma mass spectrometer (ICP-MS), an atomic absorption spectrometer (AAS), and an ion chromatograph (IC).

According to an aspect, the unmanned automated analysis system may further include a sample storage unit configured to store samples with completed analysis in the analysis target unit.

According to an aspect, the robot arm unit may include:
a pillar part extending in a vertical direction;
a first guide part extending in a first direction perpendicular to the vertical direction and fixedly coupled to the pillar part;
a first moving part coupled to the first guide part so as to be slidable along the first direction;
a second guide part extending in a second direction perpendicular to the vertical direction and the first direction and fixedly coupled to the first moving part;
a second moving part coupled to the second guide part so as to be slidable along the second direction;
a robot arm part having one end part connected to the second moving part;
a gripper part connected to another end part of the robot arm part; and
the electrostatic neutralization part coupled to the other end part of the robot arm part with the gripper part.

### Advantageous Effects

An unmanned automated analysis system of the present disclosure may significantly improve worker safety by completely eliminating contact with substances harmful to the human body (such as HF). In addition, the unmanned automated analysis system of the present disclosure allows 24-hour automated operation, maximizing work efficiency, and may ensure precision and reliability by reducing analysis errors due to skill level.

The unmanned automated analysis system of the present disclosure may increase efficiency and accuracy by integrating and automating the sample measuring, preprocessing, dilution, and analysis processes.

The unmanned automated analysis system of the present disclosure may minimize direct handling of harmful chemicals and ensure safety by eliminating static electricity generated in the work environment.

The unmanned automated analysis system of the present disclosure may always guarantee consistent quality results regardless of the worker's skill level.

The unmanned automated analysis system of the present disclosure may ensure safety for the human body while improving work efficiency and analysis precision by automating the entire process including sample preprocessing and analysis, and integrating a static electricity removal function.

### Brief Description of Drawings

FIG. 1 is a conceptual diagram illustrating an unmanned automated analysis system of the present disclosure.
FIG. 2 is a conceptual diagram illustrating an embodiment of a robot arm unit.
FIGS. 3A to 3C are conceptual diagrams illustrating a gripper part.
FIG. 4 is a block diagram illustrating an operation process of a sample measuring unit.
FIG. 5 is a block diagram illustrating an operation process of a sample measuring unit.
FIG. 6 is a block diagram illustrating an operation process of a sample analysis unit.

### Best Mode for Carrying Out the Invention

Hereinafter, embodiments according to the present disclosure will be described in detail with reference to the accompanying drawings. In this process, the size or shape of the components shown in the drawings may be exaggerated for clarity and convenience of explanation. In addition, terms specifically defined in consideration of the configuration and operation of the present disclosure may vary according to the intentions or customs of users and operators. Definitions of these terms should be made based on the content throughout this specification.

In the description of the present disclosure, it should be noted that an orientation or positional relationship indicated by the terms such as "center", "upper", "lower", "left", "right", "vertical", "horizontal", "inner side", "outer side", "one side", and "other side" is based on an orientation or positional relationship shown in a drawing or an orientation or positional relationship that is placed when using the product of the present disclosure on a daily basis, and is merely for explanation and brief description of the present disclosure, and it does not suggest or imply that an illustrated device or element must necessarily be configured or operated in a specified orientation and should not be construed as limiting the present disclosure.

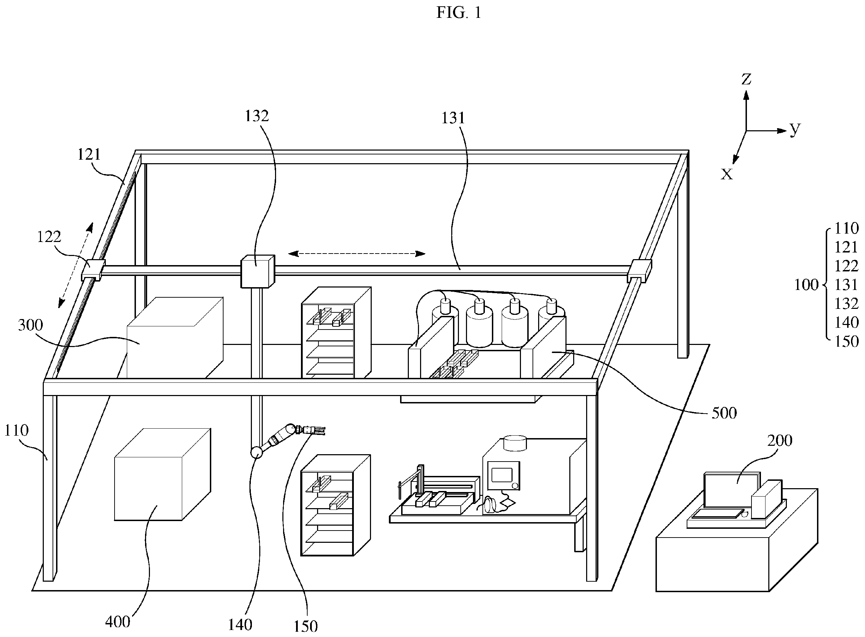

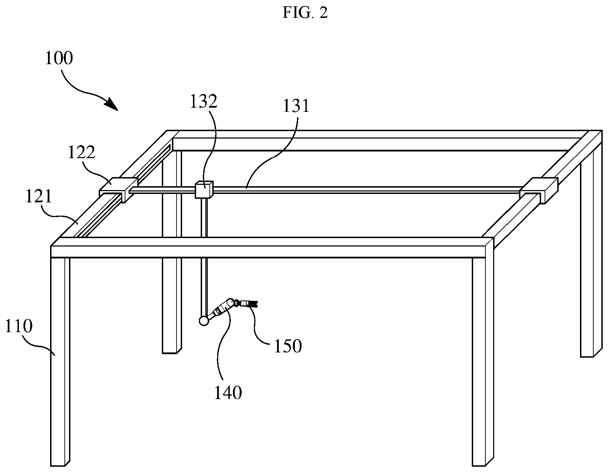

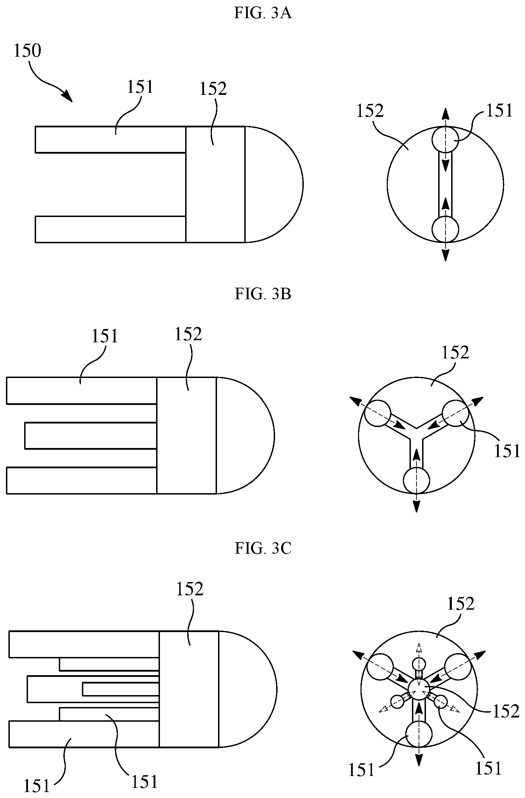

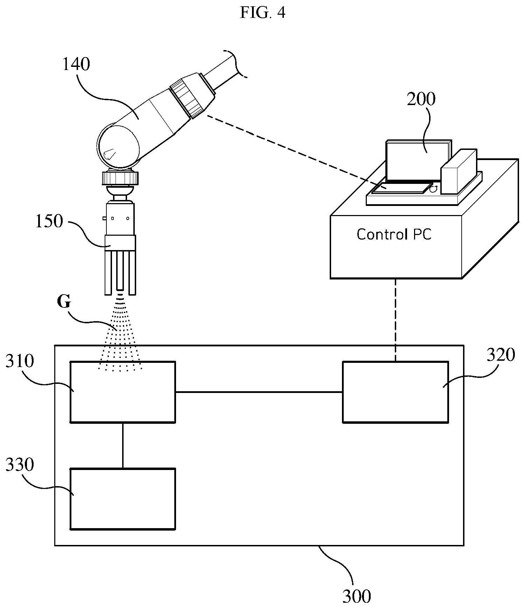

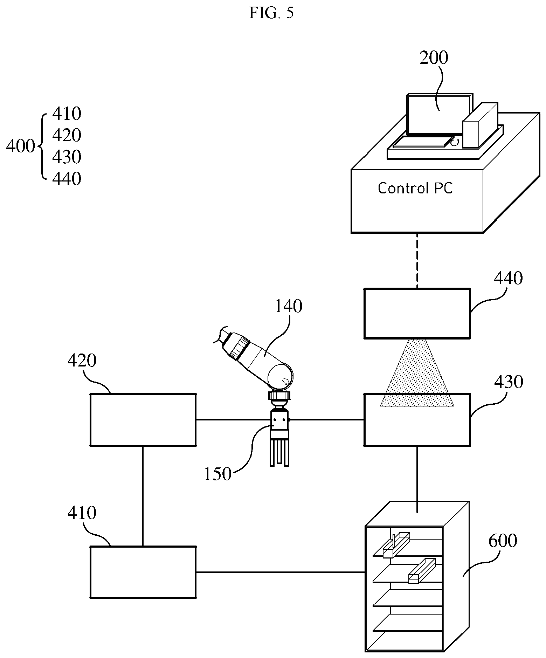

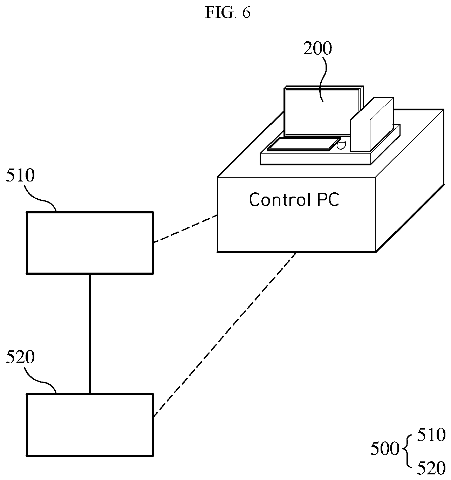

FIG. 1 is a conceptual diagram illustrating an unmanned automated analysis system of the present disclosure. FIG. 2 is a conceptual diagram illustrating an embodiment of a robot arm unit 100. FIGS. 3A to 3C are conceptual diagrams illustrating a gripper part 150. FIG. 4 is a block diagram illustrating a sample measuring unit 300. FIG. 5 is a block diagram illustrating an operation process of a sample measuring unit 300. FIG. 6 is a block diagram illustrating an operation process of a sample analysis unit.

Hereinafter, with reference to FIGS. 1 to 6, the unmanned automated analysis device of the present disclosure will be described in detail.

The unmanned automated analysis system of the present disclosure is intended to completely automate the analysis of inorganic component samples. Specifically, all processes, such as distribution, preprocessing, dilution, analysis, and disposal of samples, are performed unmanned without human intervention. Through this, the risk of accidents that may occur during manual work is reduced and the reproducibility and reliability of the analysis are improved.

As illustrated in FIG. 1, the unmanned automated analysis system of the present disclosure may include a sample measuring unit 300, a sample preprocessing unit 400, a sample analysis unit, a sample storage unit 600, a control unit 200, and a robot arm unit 100.

The unmanned automated analysis system of the present disclosure is network-connected among the sample measuring unit 300, the sample preprocessing unit 400, the sample analysis unit, the sample storage unit 600, and the robot arm unit 100, enabling data communication, and may be controlled through the control unit 200.

Detailed operations in the sample measuring unit 300, sample preprocessing unit 400, sample analysis unit, and sample storage unit 600 may be individually operated in each part, or may be integrally controlled by the control unit 200. The location of the sample may be monitored in real time by the control unit 200. The movement of the sample may be performed by the robot arm unit 100. In addition, the processing of the sample in each unit may be performed by the robot arm unit 100.

As an embodiment, in the unmanned automated analysis system of the present disclosure, the robot arm unit 100 may be provided with an electrostatic neutralization part (not shown). The robot arm unit 100 may move the sample between the sample measuring unit 300, the sample preprocessing unit 400, the sample analysis unit, and the sample storage unit 600, and electrically neutralize the sample at the same time. Specifically, the robot arm unit 100 may not only move the sample, but also approach one or more of the units to neutralize the sample with the electrostatic neutralization part or perform a neutralization operation while moving. Here, "neutralization" means electrical neutralization using an electrostatic neutralization part.

Specifically, the electrostatic neutralization part may prevent the sample from being charged with a negative or positive charge. More specifically, the electrostatic neutralization part may neutralize the sample to be electrically neutral when the sample is charged with a negative or positive charge.

For example, the electrostatic neutralization part is ionization-based and may be one of an ionizer gun, an ionizing blower, an ionizing fan, an ionizing bar, an ionizing nozzle, a DC ionizer, an AC ionizer, a pulsed DC ionizer, a radioactive ionizer, and an ion balance control air system.

For another example, the electrostatic neutralization part is non-contact-based among non-ionization-based, and may be one of an electrostatic dissipation field, a highfrequency electrostatic neutralizer, a magnetic-based electrostatic neutralizer, and an ultrasonic electrostatic neutralizer.

For another example, the electrostatic neutralization part is contact-based among non-ionization-based, and may be one of an anti-static brush, a grounding system, a conductive roller, an anti-static mat, anti-static gloves, and anti-static tweezers.

As illustrated in FIGS. 1 and 2, the robot arm unit 100 may include a pillar part 110, a first guide part 121, a first moving part 122, a second guide part 131, a second moving part 132, a robot arm part 140, a gripper part 150, and an electrostatic neutralization part (not illustrated). In FIG. 1, the z-axis may be a vertical direction, the x-axis may be a first direction, and the y-axis may be a second direction.

The pillar part 110 may be a rigid support and may extend in the vertical direction. A plurality of pillar parts 110 may be provided. For example, four pillar parts 110 may be provided as illustrated in FIGS. 1 and 2.

The first guide part 121 may extend in the first direction and be fixedly coupled to the pillar part 110. Specifically, the first guide part 121 may be coupled to the upper end part of the pillar part 110. More specifically, one first guide part 121 may be coupled to two pillar parts 110, and the pillar parts 110 may be coupled to each of both end parts of the first guide. A plurality of first guide parts 121 may be provided. For example, two first guide parts 121 may be provided. The first guide part 121 may be provided as a rigid support.

The first moving part 122 may be coupled to the first guide part 121 so as to be slidable along the first direction. A first driving part may be provided between the first moving part 122 and the first guide part 121, and the first driving part may provide power so that the first moving part 122 may change a relative position with respect to the first guide part 121. In addition, the first driving part may be operated by receiving a control signal from the control unit 200. The first moving part 122 may be configured in plurality, and for example, may be provided in the same number as the first guide part 121 and may be coupled with each other.

The second guide part 131 may extend in the second direction and be fixedly coupled to the first moving part 122. Specifically, each of the two end parts of the second guide part 131 may be coupled to the first moving part 122. The second guide part 131 may be provided as a rigid support. .

The second moving part 132 may be coupled to the second guide part 131 so as to be slidable along the second direction. A second driving part may be provided between the second moving part 132 and the second guide part 131, and this second driving part may provide power so that the second moving part 132 may change a relative position with respect to the second guide part 131. In addition, the second driving part may be operated by receiving a control signal from the control unit 200.

The robot arm part 140 may be connected to one end part of the second moving part 132. The robot arm part 140 is a multi-joint multi-axis robot and may be provided with a structure of at least three axes or more, preferably six axes or more. The upper end part of the robot arm part 140 is connected to the second moving part 132 and may be controlled through the control unit 200.

The gripper part 150 is connected to the other end part of the robot arm part 140, and the electrostatic neutralization part may be coupled to the other end together with the gripper part 150. In other words, as an end effector of the robot arm part 140, the gripper part 150 and the electrostatic neutralization part (not shown) may be mounted together to perform neutralization and work functions.

Since the analysis system according to the present disclosure may handle acid solutions depending on the intended use, it is preferable that the robot arm part and the gripper part 150 be manufactured from an acid-resistant material. For example, an acid-resistant metal, a general metal coated with an acid-resistant metal, a material coated with a polymer such as polytetrafluoroethylene or polyethylene, or an engineering plastic material may be used.

The end effector of the robot arm part 140 may have a structure that may be additionally replaced as needed. The unmanned automated analysis system of the present disclosure includes a tool storage unit, and the robot arm unit 100 may replace the end effector according to a command from the control unit 200.

As illustrated in FIGS. 3A to 3C, the gripper part 150 as an end effector may include various types of gripper fingers 151. For example, the number of gripper fingers 151 may be configured differently. In addition, the gripper body 152 may be equipped with the electrostatic neutralization part, and a hole (not shown) may be formed to spray a negative/positive ion gas G (see FIG. 4) for neutralization. The gripper finger 151 may be provided with a structure whose length may be adjusted so as to be adjacent to the sample.

In the unmanned automated analysis system of the present disclosure, the sample measuring unit 300 may measure the analysis target sample into a set amount and prepare the same as a first state sample.

The first state sample means a state in which the sample is divided into a set amount in a sample container, and the material of the sample container may be selected in consideration of requirements such as acid resistance and microwave temperature. The preferred material is glass, but materials such as quartz or plastic (e.g., PTFE) may also be used. The important point is that the material must be free of sample contamination.

The amount of sample required for analysis in a single analysis unit may be defined as a 'set amount'. The analysis target sample is a sample for measurement, and may be an unknown sample whose components or state are unknown. The state of the sample is not specified and may exist in various forms such as powder, solid, and liquid.

As illustrated in FIG. 4, the sample measuring unit 300 may include a measuring part 310, a dividing part 320, and an identification part 330. The measuring part 310 may measure the mass or volume of the analysis target sample and may be, for example, an electronic balance. The measuring part 310 may measure the total amount of the analysis target sample that has entered the sample measuring unit 300 or the amount required for analysis and record this as a measured sample amount value. In addition, the measured value may be transmitted to the control unit 200 or may be measured by receiving a specified value from the control unit 200. The measured sample amount value may be recorded as a mass or volume value.

The identification part 330 may identify the type of the analysis target sample entering the measuring part 310 by the robot arm unit 100. For example, the identification part 330 may identify a tag or label attached to a sample container or read the analysis target sample itself. The identified type value may be matched with the measured sample amount value and transmitted to the control unit 200.

After the amount of the analysis target sample is measured in the measuring part 310, the robot arm unit 100 may operate the electrostatic neutralization part to remove static electricity from the sample. By doing so, the possibility of static electricity interfering, for example, in the process of dividing a powdered sample may be reduced. Increasing the accuracy of sample sampling through static electricity removal is one of the important features of the present disclosure.

The dividing part 320 may divide the analysis target sample into small portions and prepare them as first state samples. The first state samples may be prepared in various forms, such as 21 sets, 40 sets, or 60 sets, depending on the intended use.

In the unmanned automated analysis system of the present disclosure, the sample preprocessing unit 400 may preprocess the first state sample to prepare the same as a second state sample. The sample preprocessing is to prepare a second state sample, and the second state sample may be a state in which the analysis target sample is dissolved in an acid solvent.

As illustrated in FIG. 5, the sample preprocessing unit 400 may include a solvent injection part 410, a preprocessing part 420, a heating plate part 430, and a sample monitoring part 440.

The solvent injection part 410 may inject the acid solvent into the sample container containing the first state sample. In addition, if the solvent evaporates excessively in the heating plate part 430, an additional solvent such as ultrapure water may be injected. This is to inject the acid solvent during the sample preprocessing process and prevent the sample from being lost due to excessive evaporation of the solvent.

The injection of the acid solvent may be performed in the preprocessing part 420 or the heating plate part 430, and the injection of a solvent such as ultrapure water may be performed in the heating plate part 430 or the sample storage unit 600.

The solvent injection part 410 may be designed as a movable facility, and may be moved by itself or by a robot arm unit 100. In some cases, it may be operated in a way that it is mounted on the robot arm unit 100 and moves together.

The preprocessing part 420 may convert the sample injected with the acid solvent into the second state sample by preprocessing it using microwaves. During the preprocessing process, the robot arm unit 100 may attach a container cover to the sample container to make the container into a sealed state. When the sealed sample container is heated in the preprocessing part 420, a high-pressure state is created due to the internal vapor.

The heating plate part 430 may maintain the temperature of the second state sample or supply heat before and after the sample is preprocessed in the preprocessing part 420.

The monitoring part may monitor the amount of the sample in the sample container located in the heating plate part 430, and may be configured as a device such as a water level sensor, an optical sensor, or a camera.

When the amount of the sample in the sample container decreases below a reference value, the monitoring part may transmit a movement signal to the control unit 200. When the control unit 200 receives a movement signal, the robot arm unit 100 may move the sample container of the heating plate part 430 to the sample storage unit 600.

The control unit 200 may transmit one of the following command signals to the robot arm unit 100.
i) A command for moving the sample container to the heating plate part 430, heating the sample container for a predetermined period of time, moving the sample container to the preprocessing part 420 to perform preprocessing, and then moving the sample container back to the heating plate part 430.
ii) A command for moving the sample container to the preprocessing part 420 to perform preprocessing, and then moving the sample container to the heating plate part 430.
iii) A command for moving the sample container to the preprocessing part 420 to perform preprocessing, and then moving the preprocessed second state sample to the sample storage unit 600.

With commands like the above, processing such as preheating may be performed before the first state sample enters the preprocessing part 420.

In the unmanned automated analysis system of the present disclosure, the sample dilution unit 500 may dilute the second state sample to prepare the same as a third state sample.

The third state sample may be diluted to an optimized concentration for analysis by the analysis unit.

As illustrated in FIG. 6, the sample dilution unit 500 may include a sample dilution part 510 that dilutes the second state sample to an optimized concentration suitable for analysis by the analysis unit and processes it as a third state sample, and a standard solution dilution part 520 that dilutes a high-concentration standard solution to prepare a standard solution for creating a calibration curve.

The sample dilution part 510 may perform operations such as filtering, centrifugation, mixing, and sonication as needed. In addition, operations of adding additional solutions such as a specified standard solution, additional acid, or ultrapure water are possible.

The standard solution dilution part 520 may dilute a high-concentration standard solution to prepare a standard solution for creating a calibration curve required for analysis. If the sample preprocessed in the preprocessing part 420 does not require dilution, it may be adjusted to a specific volume or weight using ultrapure water. If additional dilution is required, some of the solution may be pipetted into another container and then diluted with ultrapure water to reach the target volume or weight.

The robot arm unit 100 may receive type information of the second state sample from the control unit 200 and transport the standard solution to the standard solution dilution part.

In the unmanned automated analysis system of the present disclosure, the analysis unit may include one or more of an inductively coupled plasma optical emission spectrometer (ICP-OES), an inductively coupled plasma mass spectrometer (ICP-MS), an atomic absorption spectrometer (AAS), and an ion chromatograph (IC).

The sample storage unit 600 may store one or more of the first state sample, the second state sample, and the third state sample. Alternatively, the sample storage unit 600 may store a sample whose analysis has been completed in the analysis target unit.

In other words, the sample storage unit 600 is a storage space (cabinet) for storing samples, and may be used as a storage box for waiting for movement before analysis, and may be used as a sample storage box before sample disposal after analysis.

The control unit 200 may mainly control the robot arm unit 100.

For example, a smart phone, a tablet PC, a laptop, a netbook, etc., may be used for the control unit 200, and may play a role in setting initial control conditions, receiving and displaying operating status information of an unmanned automated analysis system, and inputting control conditions.

Although embodiments according to the present disclosure have been described above, they are merely illustrative and those skilled in the art will understand that various modifications and embodiments of equivalent range are possible therefrom. Therefore, the true technical protection scope of the present disclosure should be defined by the appended claims.

### <Explanation of Symbols>

100...Robot arm unit 110...Pillar part 121...First guide part 122...First moving part
131...Second guide part 132...Second moving part 140...Robot arm part 150...Gripper part
151...Gripper finger 152...Gripper body 200...Control unit
300...Sample measuring unit 310...Measuring part 320...Dividing part 330...Identification part
400...Sample preprocessing unit 410...Solvent injection part 420...Preprocessing part
430...Heating plate part 440...Sample monitoring part 500...Sample dilution unit
510...Sample dilution part 520...Standard solution dilution part 600...Sample storage unit

## Claims

1. An unmanned automated analysis system comprising:
a sample measuring unit configured to measure an analysis target sample in a set amount and prepare the same as a first state sample;
a sample preprocessing unit configured to preprocess the first state sample and prepare the same as a second state sample;
a sample dilution unit configured to dilute the second state sample and prepare the same as a third state sample;
a sample analysis unit configured to analyze the third state sample;
a robot arm unit configured to move one or more of the first state sample, the second state sample, and the third state sample; and
a control unit configured to control the robot arm unit,
wherein the robot arm unit is provided with an electrostatic neutralization part configured to electrically neutralize one or more of the first state sample, the second state sample, and the third state sample.

2. The unmanned automated analysis system of claim 1, wherein the sample measuring unit comprises:
a measuring part configured to measure the analysis target sample; and
a dividing part configured to divide the analysis target sample into the set amount and prepare the same as the first state sample, and
wherein the measuring part is configured to transmit a measured sample amount value of the measured analysis target sample to the control unit.

3. The unmanned automated analysis system of claim 2, wherein, after an amount of the analysis target sample is measured in the measuring part, the robot arm unit is configured to operate the electrostatic neutralization part to remove static electricity from the analysis target sample.

4. The unmanned automated analysis system of claim 2, wherein the sample measuring unit further comprises an identification part configured to identify a type of the analysis target sample, and
wherein the identification part is configured to match an identified identification type value of the analysis target sample with the measured sample amount value and transmit the identification type value to the control unit.

5. The unmanned automated analysis system of claim 2, wherein physical quantity of the measured sample amount value measured by the measuring part is mass or volume.

6. The unmanned automated analysis system of claim 2, wherein the dividing part is provided with one or more sample containers, and
the analysis target sample divided into the set amount is placed in the sample container and prepared as the first state sample.

7. The unmanned automated analysis system of claim 6, wherein the sample preprocessing unit comprises:
a solvent injection part configured to inject an acid solvent into the sample container containing the first state sample;
a preprocessing part configured to preprocess the sample injected with the acid solvent using a microwave and process the same into the second state sample; and
a heating plate part configured to maintain temperature of the second state sample.

8. The unmanned automated analysis system of claim 7, wherein, when the sample container is introduced into the preprocessing part, the robot arm unit is configured to couple a container cover to the sample container to make the sample container into a sealed container.

9. The unmanned automated analysis system of claim 7, further comprising:
a sample storage unit in which one or more of the first state sample, the second state sample and the third state sample are stored,
wherein the sample preprocessing unit further comprises a sample monitoring part configured to monitor an amount of sample in the sample container located in the heating plate part,
the sample monitoring part is configured to transmit a movement signal to the control unit when the amount of sample in the sample container is below a reference value, and
when the control unit receives the movement signal, the robot arm unit is configured to move the sample container of the heating plate part to the sample storage unit.

10. The unmanned automated analysis system of claim 7, wherein the control unit is configured to transmit to the robot arm unit one of the following command signals for:
i) moving the sample container to the heating plate part, heating the sample container for a predetermined period of time, performing preprocessing in the preprocessing part, and then moving the sample container back to the heating plate part;
ii) moving the sample container to the preprocessing part to perform preprocessing, and moving the sample container to the heating plate part; and
iii) moving the sample container to the preprocessing part to perform preprocessing, and moving the preprocessed second state sample to a sample storage unit.

11. The unmanned automated analysis system of claim 1, wherein the sample dilution unit comprises:
an analysis target sample dilution part configured to dilute the second state sample to an optimized concentration for analysis by the analysis unit and process the same as the third state sample; and
a standard solution dilution part configured to dilute a standard solution to create a calibration curve.

12. The unmanned automated analysis system of claim 11, wherein the robot arm unit is configured to receive type information of the second state sample from the control unit and transport the standard solution to the standard solution dilution part.

13. The unmanned automated analysis system of claim 1, wherein the analysis unit comprises one or more of an inductively coupled plasma optical emission spectrometer (ICP-OES), an inductively coupled plasma mass spectrometer (ICP-MS), an atomic absorption spectrometer (AAS), and an ion chromatograph (IC).

14. The unmanned automated analysis system of claim 1, further comprising a sample storage unit configured to store samples with completed analysis in an analysis target unit.

15. The unmanned automated analysis system of claim 1, wherein the robot arm unit comprises:
a pillar part extending in a vertical direction;
a first guide part extending in a first direction perpendicular to the vertical direction and fixedly coupled to the pillar part;
a first moving part coupled to the first guide part so as to be slidable along the first direction;
a second guide part extending in a second direction perpendicular to the vertical direction and the first direction and fixedly coupled to the first moving part;
a second moving part coupled to the second guide part so as to be slidable along the second direction;
a robot arm part having one end part connected to the second moving part;
a gripper part connected to another end part of the robot arm part; and
the electrostatic neutralization part coupled to the other end part of the robot arm part with the gripper part.
